# EUROPEAN PATENT APPLICATION

(11) **EP 4 007 156 A1**
(43) Date of publication of application: **01.06.2022**
(21) Application number: 20275174.9
(22) Date of filing: 25.11.2020
(51) Int. Cl.: H02P 5/68, H02J 3/38, H02M 7/493

(54) **CONTROL DISTRIBUTION ARCHITECTURE**

(71) Applicant: Hamilton Sundstrand Corporation, Charlotte, NC 28217 (US)
(72) Inventor: MINSHULL, Stephen, Bromsgrove, B60 3SN (GB); PARKIN, Joshua, Solihull, West Midlands B90 3LE (GB); PANCHAL, Pratik, High Wycombe, Buckinghamshire HP136GR (GB)
(74) Representative: Dehns

(57) **Abstract**

A system for providing electric motor control to a plurality of motor loads (1 - n), the system comprising: one or more motor controllers (200' - 20n-x') arranged to drive one or more of the loads; switching means (300) configured to selectively provide electrical connections between the one or more motor controllers and the loads; and a controller (400) arranged to configure the switching means to connect one or more of the motor controllers to one or more of the loads in response to a control signal; whereby the number of motor controllers is less than the number of motor loads to be controlled.

## Description

### TECHNICAL FIELD

The present disclosure is concerned with distributing power between, and controlling, multiple loads.

### BACKGROUND

Many types of electrical system include several loads to be provided with power and to be controlled. Traditionally, each load would have its own dedicated power supply and its own dedicated motor controller, since the different loads may have different power and control requirements. In other systems, the motor loads may be supplied from a common power supply, but each still has its own dedicated motor controller.

In some fields, there is a desire or a trend to reduce the number of system components in order to e.g. reduce weight or size or complexity.

In aircraft, there is currently a trend towards so-called More Electric Aircraft (MEA) whereby loads such as flight control surfaces, landing gear, actuators, fans, pumps etc. which have traditionally be controlled by hydraulic and mechanical systems are now being designed to be controlled electrically by means of an electric motor. Steps are also being made towards All Electric Aircraft, where all loads, including the propulsion systems, will be controlled by electric motors. Whilst there are clear and significant advantages to electrical control of aircraft systems, and electrical control of systems in other fields, in terms of weight, size, reliability, environmental factors, cost and maintenance, further improvements can be made.

The aim of the present disclosure is to provide a control architecture and method that further improves the size, weight and efficiency of electrical systems having several electrically driven loads.

### SUMMARY

According to a first aspect of the disclosure, there is provided a system for providing electric motor control to a plurality of motor loads, the system comprising: one or more motor controllers arranged to drive one or more of the loads; switching means configured to selectively provide electrical connections between the one or more motor controllers and the loads; and a controller arranged to configure the switching means to connect one or more of the motor controllers to one or more of the loads in response to a control signal; whereby the number of motor controllers is less than the number of motor loads to be controlled.

The controller may be arranged to configure the switching means to connect one or more of the motor controllers to one or more of the loads in a time multiplexed manner in response to the control signal indicating changes in the motor load(s) to be controlled over time.

The system may also include a common high voltage power supply for the one or more motor controllers.

The system may also include a power converter to convert the high voltage power to a low voltage power supply for components of the system.

A power bus may provide low voltage power external to the system.

To make assembly and reconfiguration/replacement easier, the system may include a housing rack into which the one or more controllers, the switching means and the controller can be removably and replaceably mounted.

If required to drive large loads, the controller can be configured to cause the switching means to connect two or more motor controllers to a single load.

The controller may be configured to cause the switching means to change the connection to another motor controller in the event of a detected failure in a motor controller currently connected to a load.

According to another aspect, there is provided a method of driving a plurality of electric motor loads comprising configuring switches to provide connections between one or more motor controllers according to a control signal indicative of motor load requirements, whereby the number of available motor controllers is smaller than the number of loads to be driven.

The switches may be reconfigured to provide connections between different combinations of the motor controllers and the loads according to the control signal.

The control signal may control changes in the switch configurations according to the loads to be driven over time.

According to another aspect, there is provided an electric motor load driving system comprising: a first plurality of loads (1 - n) to be driven; a second plurality of motor controllers (200' - 20n-x') for driving the loads, the second plurality being less than the first plurality; a controller (400) for configuring connections between one or more of the motor controllers with one or more of the loads according to the requirements of the loads to be driven at a given time.

In the embodiment described in detail, the loads are aircraft loads and the control signal causes the switch configurations to change according to the flight path of the aircraft. The system may, however, also be used with different loads.

Preferred embodiments will now be described, by way of example only, with reference to the drawings.

### BRIEF DESCRIPTION OF THE DRAWINGS

Figure 1 is a block diagram of a conventional electric motor drive architecture with multiple loads.
Figure 2 shows an example of activation of different motor loads at different flight phases of an aircraft when the motor loads are in an aircraft control system.
Figure 3 is a block diagram of an electric motor drive architecture according to the disclosure.

### DETAILED DESCRIPTION

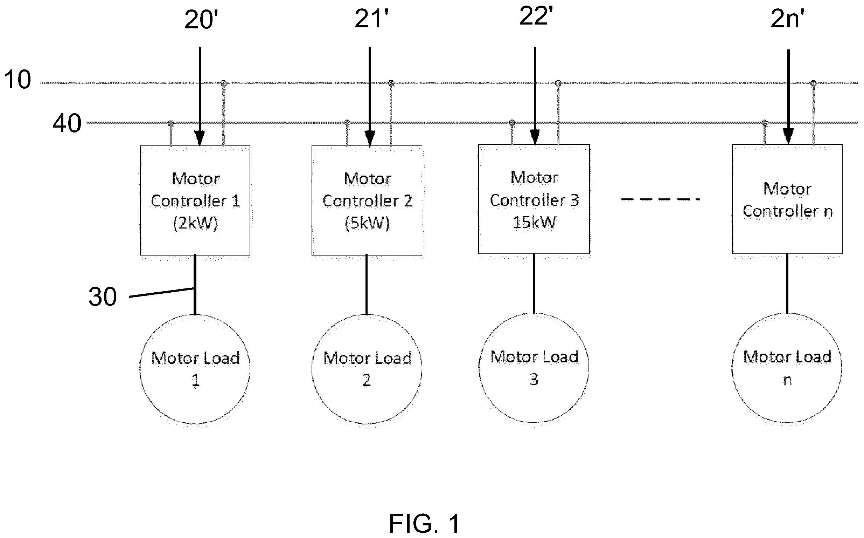

First, by way of background, a conventional electric motor drive architecture will be described with reference to Fig. 1.

The system shown in Figure 1 comprises a plurality of motor loads 1 - n each driven by an electric motor (not separately shown). Each motor load 1 - n is provided with power and control by a respective motor controller 1' - n'. Each motor and motor controller is a dedicated motor/motor controller designed for the specific load with e.g. the appropriate peak and average power rating for that load.

Power is provided to each of the motor controllers. In the example shown, the motor controllers receive high voltage power 10, which could be AC or DC, from the aircraft electrical network. This is converted in the motor controller to a suitable form to power the respective motors. Typically, each motor controller outputs, 30, a 3-phase AC output voltage to control a 3-phase AC current in its electric motor. Each motor controller is also typically connected to a low voltage DC power supply 40 which provides power to the motor controller for control and monitoring functions. Each motor controller 1' - n' receives command signals and can provide feedback data over a data bus 20', 21'... 2n' to a higher level system controller e.g., in the case of aircraft systems, a flight control computer (FCC) for a primary flight actuator load.

In systems having several motors and several motor loads, it may be that not all motors need to be operated at all times. In an aircraft system, for example, some motors or motor loads may only need to be operated for short periods or infrequently depending on the different stages of the flight. As an example, the landing gear actuators are only required just after take-off and just before landing. There are many other situations, both in aircraft and other systems having multiple motors/motor loads where not all are used at the same time and all of the time.

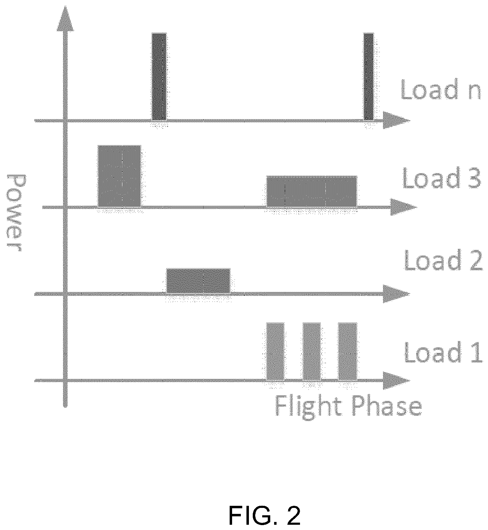

Fig. 2 shows a timing diagram as an example of how four loads, and, therefore, four electric motors, might be utilised during a flight. As can be seen, load 1 is only required to be driven for some short intervals towards the end of the flight. Load 2, on the other hand, is only driven after take-off, for a period of time. Load 3 is driven during just after take-off and before landing. Load n is only driven for a short time after take-off and landing. This is clearly just one example, but shows that inefficiencies can exist when multiple loads with respective multiple electric motors and, hence, respective multiple motor controllers are installed. The size and weight, as well as cost and maintenance is not necessarily in proportion to the amount of time all of the motors need to be operated.

This disclosure provides an architecture whereby a smaller number of motor controllers is provided and their use is optimised for driving several loads as they are required. The architecture reduces the number of motor controllers to less than the number of motor loads by multiplexing the motor loads through an interconnection matrix. The interconnection matrix is configured such that each motor load is connected to a motor controller as and when the motor load needs to be operated. In this way, depending on the system and its application, it might be possible to have half as many motor controllers as motor loads, which would greatly reduce the overall weight and size and improve efficiency of the system.

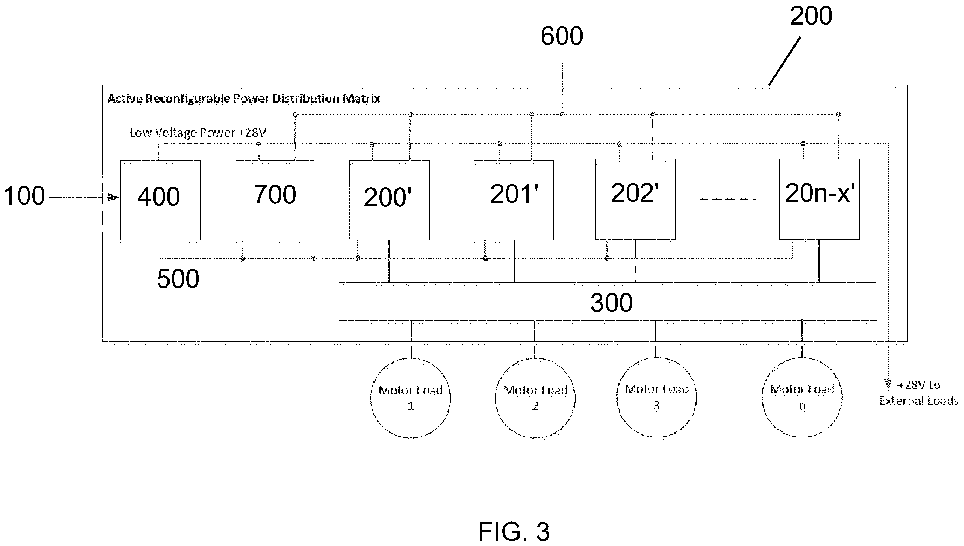

The architecture will now be further described with reference to Fig. 3.

As with the conventional arrangement shown in Fig. 1, the system is provided to operate a number of motor loads 1 - n based on control data (here aircraft data 100). The architecture is shown, for simplicity, in a distribution matrix 200 which contains one or more motor controllers 200' - 20n-x'. The actual number of motor controllers will depend on the system and its application but will be fewer than the number of motor loads, n. In one example, there are n/2 motor controllers. The motor controllers are in communication with the motor loads via a switching matrix 300, the configuration of which is controlled by a centralised controller 400.

The control data for controlling the motor loads is input as a control signal to the centralised controller 400 which, based on the control data and the requirements for the loads at any time, will configure the switching matrix, via a data bus 500, to connect one or more available motor controllers to the load(s) to be operated at that time according to the control signal and requirements of the loads identified in the control signal. The motor controllers communicate with the centralised controller to receive commands and information about the load e.g. load type. The centralised controller can also receive commands and provide feedback for the loads and for wider systems via the data bus. The communication between the centralised controller and the motor controllers can use any suitable communication protocol e.g. CAN, Mandex-based protocols, etc.

In the arrangement shown, the motor controllers receive power from a common high voltage source 600 which could be AC or DC, although power could be provided to the motor controllers in different ways.

The structure and power output of the motor controllers may all be the same or different, and a suitable motor controller can be selected by the centralised controlled according to load requirements. To simplify the system, standard design motor controllers can be utilised all with the same power rating. This allows the motor controllers to be easily exchanged or further motor controllers to be added as required. If required, the switching matrix can be configured to combine several motor controllers in parallel to drive a larger load. In this case, the centralised controller should provide synchronisation to the motor controllers through the data bus to minimise circulating currents.

The system preferably also includes a power converter 700, here shown as a 28 V power converter, as an example. This can convert the high voltage power to a low voltage power which can be distributed to the parts of the system to provide power to the motor controller and the centralised controller for control and monitoring but which can also be provided to other systems or equipment external to the distribution matrix. This can reduce the amount of cabling/wiring needed in and around the distribution system which is especially advantageous where space and weight is at a premium e.g. in aircraft.

The components of the system can, for convenience, be mounted in a rack system so that different architectures can be readily configured e.g. by removing or slotting in motor controllers.

In the event of a failure within a motor controller or part of the switch matrix, the centralised controller can reconfigure the system to connect a motor load to be driven by a different, functioning motor controller or, if all available motor controllers are in use at the time of failure, the centralised controller can prioritise the most important loads and ensure these are serviced by reconfiguring the switch matrix.

The switch matrix 300 can be configured e.g. as a full matrix whereby every load can be connected to any and every motor controller, or could be configured as a sparse matrix having a reduced number of connection configurations and switches. Switches can be switches known in the art e.g. contactors or solid state AC switches.

By sharing a smaller number of motor controllers between the loads and controlling a switching matrix to connect the available motor controllers to the loads to be driven as required, fewer motor controllers are required than in conventional systems which results in a lower overall system weight and size and reduced cost and maintenance. Development costs can be reduced as common hardware can be applied across the system for all load types and if a rack housing is used, different system configurations can be easily and quickly realised. The system is also quickly adaptable and responsive to failure to ensure that the system can continue to operate even if a motor controller fails. Further, because the control of multiple systems in centralised and coordinated there is an improved ability to monitor data and anticipate failure and then to respond quickly to address such failure.

Although much of the detailed description has been in the context of an aircraft system, the multiplexed system of this disclosure may find application in, and provide advantages in many fields where multiple loads are to be operated. Variations on the examples described fall within the scope of the claims.

## Claims

1. A system for providing electric motor control to a plurality of motor loads, the system comprising:
one or more motor controllers (200' - 20n-x') arranged to drive one or more of the loads;
switching means (300) configured to selectively provide electrical connections between the one or more motor controllers and the loads; and
a controller (400) arranged to configure the switching means to connect one or more of the motor controllers to one or more of the loads in response to a control signal; whereby the number of motor controllers is less than the number of motor loads to be controlled.

2. The system of claim 1, whereby the controller is arranged to configure the switching means to connect one or more of the motor controllers to one or more of the loads in a time multiplexed manner in response to the control signal indicating changes in the motor load(s) to be controlled overtime.

3. The system of claim 1 or 2, further comprising a common high voltage power supply (600) for the one or more motor controllers.

4. The system of claim 3, further comprising a power converter (700) to convert the high voltage power to a low voltage power supply for components of the system.

5. The system of claim 4, further comprising a power bus for providing low voltage power external to the system.

6. The system of any preceding claim, further comprising a housing rack into which the one or more controllers, the switching means and the controller can be removably and replaceably mounted.

7. The system of any preceding claim, whereby the controller can be configured to cause the switching means to connect two or more motor controllers to a single load.

8. The system of any preceding claim, wherein the controller is configured to cause the switching means to change the connection to another motor controller in the event of a detected failure in a motor controller currently connected to a load.

9. The system of any preceding claim, being an aircraft electric system and wherein the controller is arranged to configure the switching means based on the aircraft flight path.

10. A method of driving a plurality of electric motor loads comprising configuring switches to provide connections between one or more motor controllers according to a control signal indicative of motor load requirements, whereby the number of available motor controllers is smaller than the number of loads to be driven.

11. The method of claim 10, wherein the switches are reconfigured to provide connections between different combinations of the motor controllers and the loads according to the control signal.

12. The method of claim 11, wherein the control signal controls changes in the switch configurations according to the loads to be driven over time.

13. The method of claim 12, wherein the loads are aircraft loads and the control signal causes the switch configurations to change according to the flight path of the aircraft.

14. An electric motor load driving system comprising:
a first plurality of loads (1 - n) to be driven;
a second plurality of motor controllers (200' - 20n-x') for driving the loads, the second plurality being less than the first plurality;
a controller (400) for configuring connections between one or more of the motor controllers with one or more of the loads according to the requirements of the loads to be driven at a given time.
